# EUROPEAN PATENT APPLICATION

(11) **EP 3 064 394 A1**
(43) Date of publication of application: **07.09.2016**
(21) Application number: 15157438.1
(22) Date of filing: 03.03.2015
(51) Int. Cl.: B60L 11/18, H02J 3/32, H02J 3/38, H02J 7/00, H02J 3/00, H02J 3/14

(54) **Method for charging a load and charger configured for performing the method**

(71) Applicant: ABB Technology AG, 8050 Zürich (CH)
(72) Inventor: Ugur, Ali, 2521 ZK Den Haag (NL); Bouman, Crijn, 2593 XD Den Haag (NL); Kaptein, Johannes, Gerardus, 2497 XA Den Haag (NL)
(74) Representative: Patentwerk B.V.

(57) **Abstract**

The present invention relates to a method for charging a load, such as a battery of an electric vehicle, from at least one source with a permanent power and at least one source with a fluctuating power delivery, comprising the steps of determining the total charge requested by the load; determining the time needed to charge the load with the total charge requested, based on the power available with the source with the permanent power; retrieving the total time available for charging by the load; if the total time available is more than a predetermined difference amount longer than the time needed to charge the load based on the source with the permanent power charging the load from the power source with the fluctuating power delivery until the initially determined time needed to charge the load with the total charge requested, based on the power available with the source with the permanent power remains, charging the load from the power source with the permanent power from that moment on. The invention further relates to a charger and system for performing said method.

## Description

The present invention relates to a method for charging a load, and to a charger configured for performing the method. The method in particular relates to charging a load, such as a battery of an electric vehicle, from at least one source with a permanent power and at least one source with a fluctuating power delivery.

Nowadays, more and more consumers have access to, or even possess themselves, sources of renewable energy, such as solar or wind energy. Besides environmental advantages, a reduction of energy costs can be obtained when providing ones own energy. At least that is, when the energy can be used by the user him- or herself, for the tariff for power delivered to the grid is often significantly lower than the power obtained from the web.

A difficulty with solar or wind energy is the fluctuation in the amount of power generated by the respective power source, and the fact that the moment on which the power is available can only be roughly estimated and/or predicted. However, when the user can store the energy, at least some of the general disadvantages of these sources of renewable energy can be taken away.

One means for storing generated renewable energy is to charge batteries, and in particular, a growing number of consumers possess a high capacity battery, integrated or at least forming part of their electric vehicles. These vehicle batteries can be charged with the renewable energy when it is available, but when it's not, the vehicle may not be charged at all, or not be charged to a required or desired extent in due time. It is therefore a goal of the present invention to provide a solution for the above mentioned disadvantages, and to provide a solution for the optimal use of renewable energy.

The invention thereto proposes a method for charging a load, such as a battery of an electric vehicle, from at least one source with a permanent power and at least one source with a fluctuating power delivery, comprising the steps of: A. Determining the total charge requested by the load; B. Determining the time needed to charge the load with the total charge requested, based on the power available with the source with the permanent power; C. Retrieving the total time available for charging by the load; D. - If the total time available is more than a predetermined difference amount longer than the time needed to charge the load based on the source with the permanent power: D1 - Charging the load from the power source with the fluctuating power delivery until the initially determined time needed to charge the load with the total charge requested, based on the power available with the source with the permanent power remains, D2 - Charging the load from the power source with the permanent power from that moment on.

The method according to the invention enables an optimal use of the renewable sources, while guaranteeing that pre-set charging requirements for the load are met, which is in particular in case of electric vehicles to be charged, an important advantage. Since it is well possible that the load is already charged for a relevant lot after being charged from the source with the fluctuating power delivery, it can be the case that at the initially determined moment to switch to the source with a permanent power (the so called point of no return), there is no longer a direct need to switch sources.

Preferably, the method according to the present invention therefor further comprises the steps of: D1A. - Determining the total charge still requested by the load; D1B. - Redetermining the time needed to charge the load with the total charge requested, based on the power available with the source with the permanent power, D1C. - Charging the load from the power source with the fluctuating power delivery until the pre-determined time needed to charge the load with the total charge requested, based on the power available with the source with the permanent power remains.

By re-determining the time needed to charge the load with the total charge requested, based on the power available with the source with the permanent power, an unnecessary switching of the sources is avoided, and moreover, charging the battery from the source with the permanent power, which is commonly a power source for which one has to pay. Still further advantage can be obtained when steps D1A, D1B, D1C are repeated until the predetermined remaining time differs less than a predetermined difference from the total time available and continuing with step D2.

In a preferred embodiment, the source with a permanent power is a power grid, and the source with the fluctuating power is a renewable power source, such as a solar power or a wind energy power source. This offers the advantage that the load can be charged with renewable energy if that is available, and that grid power can be used as a backup when the renewable power is not available to an extend that permits to fully charge the load with the renewable energy.

In a further embodiment, at least one of the steps is performed by a charger, coupled to the load, the at least one source with the permanent power and the at least one source with the fluctuating power delivery. A charger is to be understood as a device here, which forms an intermediate apparatus between the power sources and the load, and which may be adapted for determining a state of charge of the load, for instance by means of communication with the load, in particular with a battery or vehicle management system of a vehicle battery. The charger may further comprise means for interaction with a user, which can be a keyboard and/or a (touch) screen. Step C of retrieving the total time available for charging by the load and/or the charging power requested by the load may then comprise entering a charge time by a user.

In yet another embodiment, step C may comprise receiving the total time available and/or the charging power requested by the load through a communication line from a remote input device. This enables a user to enter a time, a desired range of action, or another quantity on which a calculation of the required time can be made. The calculation power may form part of the charger which may then be configured for performing at least one of the steps A, B or C from the vehicle.

In yet a further embodiment, the invention comprises a method for charging a load, such as a battery of an electric vehicle, from a source with a permanent power and a fluctuating power property, such as a price or a frequency, comprising the steps of:
A. - Determining the total charge requested by the load;
B. - Determining the time needed to charge the load with the total charge requested, based on the power available with the source with the permanent power;
C. - Retrieving the total time available for charging by the load;
D. - If the total time available is more than a predetermined difference amount longer than the time needed to charge the load based on the source with the permanent power:
   E1. - Until the initially determined time needed to charge the load with the total charge requested, based on the power available with the source with the permanent power remains, only charging the load when a predetermined condition, such as a maximum or minimum grid frequency or a price below a pre-set maximum is met;
   E2. - Charging the load from the power source with the permanent power from that moment on.

The invention according to the invention further relates to a method for charging a load, such as a battery of an electric vehicle, from at least one source with a permanent power and at least one source with a fluctuating power delivery, comprising the steps of:
A. - Determining the total charge requested by the load;
B. - Charging the load from the power source until the load is charged until the requested total charge,
F. - Charging the load from the power source with the fluctuating power from that moment on.

The invention according to the invention further relates to a method for charging a load, such as a battery of an electric vehicle, from at least one source with a permanent power, comprising the steps of:
A. - Determining the total charge requested by the load;
B. - Charging the load from the power source until the load is charged until the requested total charge,
G. Only charging the load when a predetermined condition, such as a maximum or minimum grid frequency or a price below a pre-set maximum is met.

The invention also relates to a charger for charging a load, such as a battery of an electric vehicle, from at least one source with a permanent power and at least one source with a fluctuating power delivery, comprising means for determining the total charge requested by the load; means for determining the power available with the source with the permanent power; means for determining the time needed to charge the load with the total charge requested, based on the power available with the source with the permanent power; means for retrieving the total time available for charging by the load; means for determining if the total time available is more than a predetermined difference amount longer than the time needed to charge the load based on the source with the permanent power, which is configured for performing a method as described in the above.

From said charger at least one of the means for determining the total charge requested by the load; or means for retrieving the total time available for charging by the load comprise means for receiving external parameters, such as user input or data from the load. Such means for receiving external parameters comprise at least one port for data communication, for receiving data input from a smart device such as a mobile phone, via a data network. The charger may in particular be configured for charging an electric vehicle, comprising a data communication port for connecting to a data management system of the vehicle, for receiving charge parameters from the vehicle.

The invention will now be elucidated into more detail with reference to the figures. Herein:
- Figure 1 shows a schematic overview of a system according to the invention; and
- Figure 2 shows a schematic overview of a method according to the present invention.

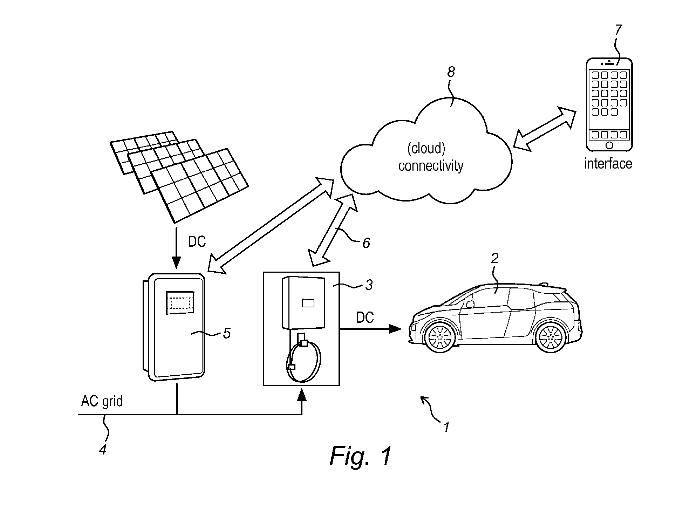

Figure 1 shows a system 1 for charging a battery of an electric vehicle 2, comprising a charger 3 a source 4 with a permanent power, and a source 5 with a fluctuating power delivery. The system comprises a port 6 for data communication, for receiving data input from a mobile phone 7, via a data network 8. The mobile phone 7 is adapted for sending user inputs regarding the total charge requested by the load and/or the total time available for charging by the load.

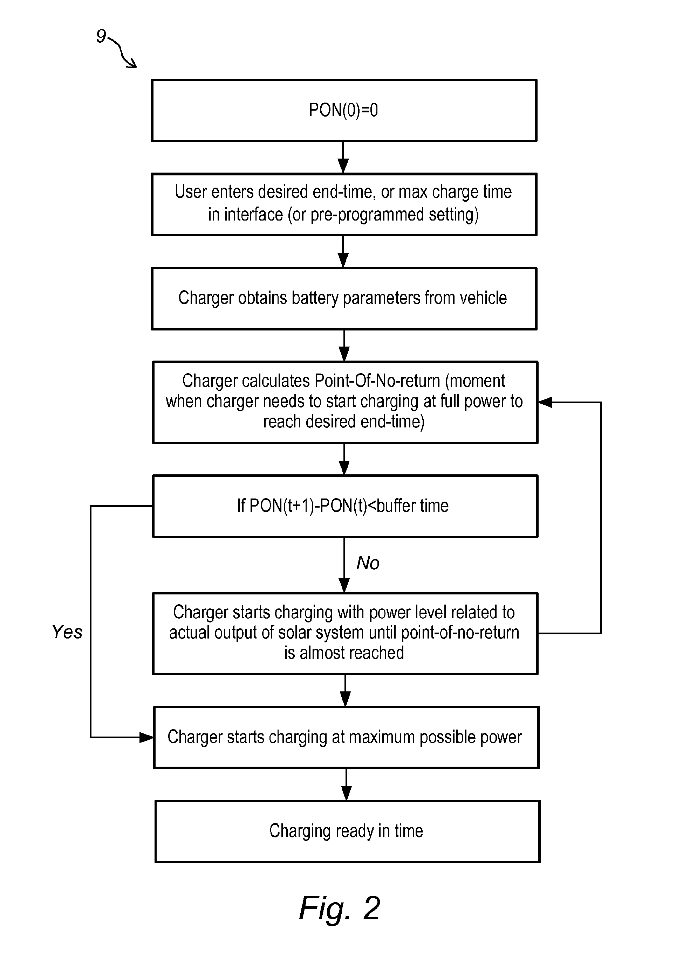

Figure 2 shows a schematic overview 9 of a method according to the present invention. The self-explanatory steps of the scheme provide a code for performing the method steps of determining the total charge requested by the load, embodied by a vehicle battery; determining the time needed to charge the load with the total charge requested, based on the power available with the source with the permanent power; retrieving the total time available for charging by the load; if the total time available is more than a predetermined difference amount longer than the time needed to charge the load based on the source with the permanent power: charging the load from the power source with the fluctuating power delivery until the initially determined time needed to charge the load with the total charge requested, based on the power available with the source with the permanent power remains. This is indicated with a point of no return. From then on, the load is charged from the power source with the permanent power.

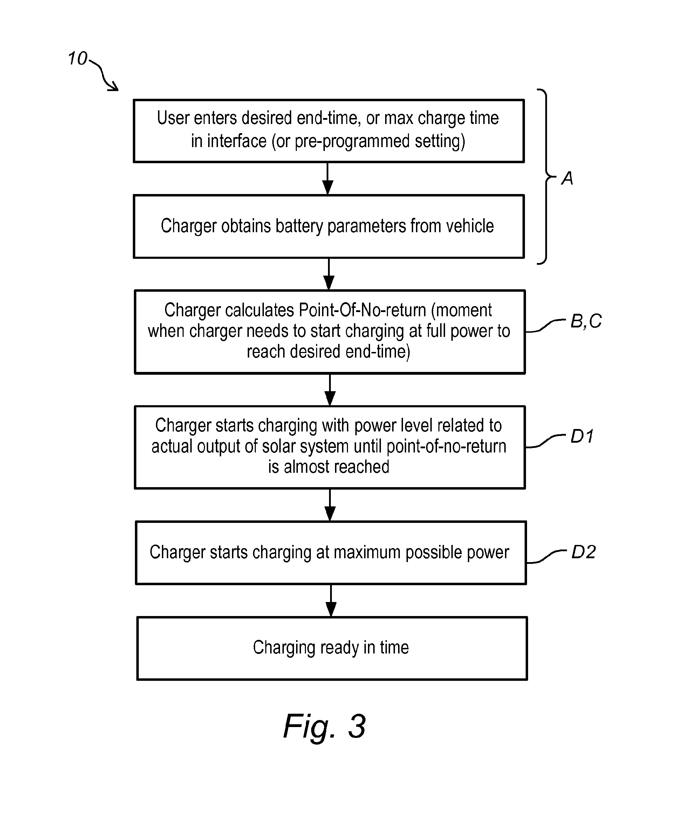

Figure 3 shows a simplified version 10 of the schematic overview from figure 2. The depicted method corresponds with the method from the independent claim 1 from the present invention, of which the corresponding method steps are indicated.

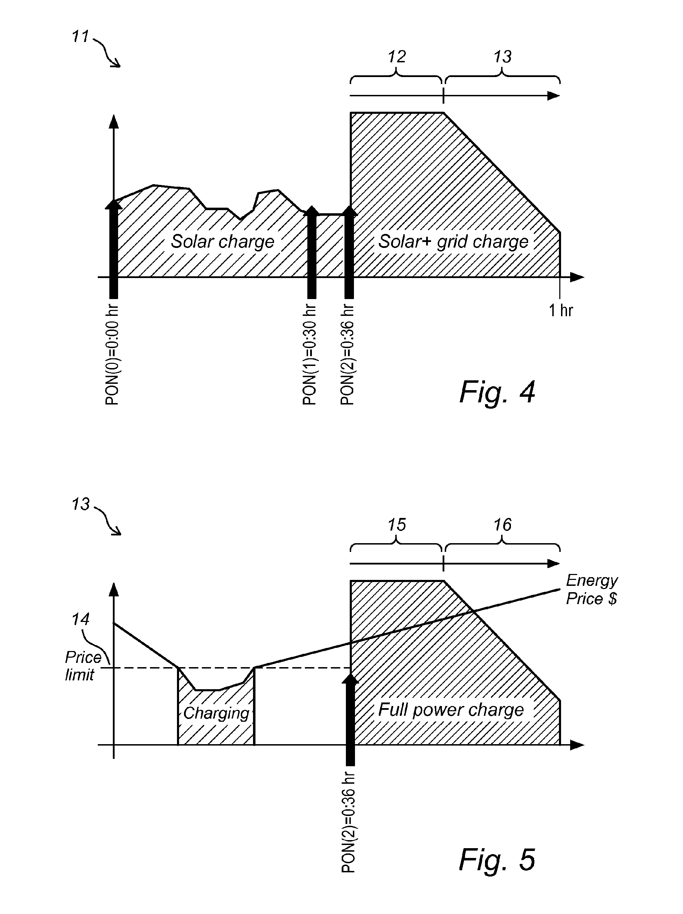

Figure 4 shows a slightly different embodiment from the one depicted in figure 3. Here, when the so called point of no return is reached, charging takes place from both power sources 11. Once it is no longer needed to charge full speed, because the set state of charge can be reached with less power, the absorption of power from the power source with permanent power level is gradually reduced 12.

Figure 5 shows a slightly different embodiment from the one depicted in figure 3. Here, charging takes place from the source with permanent power when the power price is below a predetermined level 14. When the so called point of no return is reached, charging takes place from both power sources 15. Once it is no longer needed to charge full speed, because the set state of charge can be reached with less power, the absorption of power from the power source with permanent power level is gradually reduced 16.

The embodiments shown are exemplary only, and do not limit the scope of protection of the present invention, as defined in the following claims.

## Claims

1. Method for charging a load, such as a battery of an electric vehicle, from at least one source with a permanent power and at least one source with a fluctuating power delivery, comprising the steps of:
A. - Determining the total charge requested by the load;
B. - Determining the time needed to charge the load with the total charge requested, based on the power available with the source with the permanent power;
C. - Retrieving the total time available for charging by the load;
D. - If the total time available is more than a predetermined difference amount longer than the time needed to charge the load based on the source with the permanent power:
D1. - Charging the load from the power source with the fluctuating power delivery until the initially determined time needed to charge the load with the total charge requested, based on the power available with the source with the permanent power remains,
D2. - Charging the load from the power source with the permanent power from that moment on.

2. Method according to claim 1, comprising the steps:
D1A. - Determining the total charge still requested by the load;
D1B. - Redetermining the time needed to charge the load with the total charge requested, based on the power available with the source with the permanent power,
D1C. - Charging the load from the power source with the fluctuating power delivery until the redetermined time needed to charge the load with the total charge requested, based on the power available with the source with the permanent power remains.

3. Method according to claim 2, comprising repeating steps D1A, D1B, D1C until the redetermined remaining time differs less than a predetermined difference from the total time available and continuing with step D2.

4. Method according to any of the preceding claims, wherein the source with a permanent power is a power grid, and the source with the fluctuating power is a renewable power source, such as a solar power or a wind energy power source.

5. Method according to any of the preceding claims, wherein at least one of the steps is performed by a charger, coupled to the load, the at least one source with the permanent power and the at least one source with the fluctuating power delivery.

6. Method according to any of the preceding claims, wherein step C of retrieving the total time available for charging by the load and/or the charging power requested by the load comprises entering a charge time by a user.

7. Method according to claims 5 and 6, wherein step C comprises receiving the total time available and/or the charging power requested by the load through a communication line from a remote input device.

8. Method according to any of the preceding claims 5, 6 or 7, comprising obtaining at least one of the steps A, B or C from the vehicle.

9. Method for charging a load, such as a battery of an electric vehicle, from a source with a permanent power and a fluctuating power property, such as a price or a frequency, comprising the steps of:
A. - Determining the total charge requested by the load;
B. - Determining the time needed to charge the load with the total charge requested, based on the power available with the source with the permanent power;
C. - Retrieving the total time available for charging by the load;
D. - If the total time available is more than a predetermined difference amount longer than the time needed to charge the load based on the source with the permanent power:
E1. - Until the initially determined time needed to charge the load with the total charge requested, based on the power available with the source with the permanent power remains, only charging the load when a predetermined condition, such as a maximum or
minimum grid frequency or a price below a pre-set maximum is met;
E2. - Charging the load from the power source with the permanent power from that moment on.

10. Method for charging a load, such as a battery of an electric vehicle, from at least one source with a permanent power and at least one source with a fluctuating power delivery, comprising the steps of:
A. - Determining the total charge requested by the load;
B. - Charging the load from the power source until the load is charged until the requested total charge,
F. - Charging the load from the power source with the fluctuating power from that moment on.

11. Method for charging a load, such as a battery of an electric vehicle, from at least one source with a permanent power, comprising the steps of:
A. - Determining the total charge requested by the load;
B. - Charging the load from the power source until the load is charged until the requested total charge,
G. Only charging the load when a predetermined condition, such as a maximum or minimum grid frequency or a price below a pre-set maximum is met.

12. Charger for charging a load, such as a battery of an electric vehicle, from at least one source with a permanent power and at least one source with a fluctuating power delivery, comprising:
- means for determining the total charge requested by the load;
- means for determining the power available with the source with the permanent power;
- means for determining the time needed to charge the load with the total charge requested, based on the power available with the source with the permanent power;
- means for retrieving the total time available for charging by the load;
- means for determining if the total time available is more than a predetermined difference amount longer than the time needed to charge the load based on the source with the permanent power,
and configured for performing a method according to any of the preceding claims.

13. Charger according to claim 12, wherein at least one of the:
- means for determining the total charge requested by the load; or
- means for retrieving the total time available for charging by the load;
comprise means for receiving external parameters, such as user input or data from the load.

14. Charger according to claim 13, wherein the means for receiving external parameters comprise at least one port for data communication, for receiving data input from a smart device such as a mobile phone, via a data network.

15. Charger according to claim 12 or 13, in particular configured for charging an electric vehicle, comprising:
- a data communication port for connecting to a data management system of the vehicle, for receiving charge parameters from the vehicle.

16. System for charging a load, such as a battery of an electric vehicle, comprising:
- a charger according to any of the preceding claims 12-15; coupled to
- at least one source with a permanent power, and
- at least one source with a fluctuating power delivery.

17. System according to claim 16, comprising at least one port for data communication, for receiving data input from a smart device such as a mobile phone, via a data network.

18. System according to claim 17, comprising a smart device such as a mobile phone, adapted for sending user inputs regarding the total charge requested by the load and/or the total time available for charging by the load.
